# EUROPÄISCHE PATENTANMELDUNG

(11) **EP 1 772 157 A1**
(43) Veröffentlichungstag der Anmeldung: **11.04.2007**
(21) Anmeldenummer: 05021829.6
(22) Anmeldetag: 06.10.2005
(51) Int. Cl.: A61K 51/04

(54) **Modul-Bausatz und Syntheseverfahren zum Herstellen von Radiopharmaka und Radionukliden**

(71) Anmelder: Jansen, Karl-Heinz, 82256 Fürstenfeldbrück (DE)
(72) Erfinder: Jansen, Karl-Heinz, 82256 Fürstenfeldbruck (DE)
(74) Vertreter: Grünecker, Kinkeldey, Stockmair & Schwanhäusser Anwaltssozietät

(57) **Zusammenfassung**

Die vorliegende Erfindung beschreibt einen Modulbausatz zur Produktion von Radiopharmaka und Herstellung von Nukliden mit einem Fluid- und Reagenzientransportsystem sowie Produktionseinrichtungen, die mindestens eine Einrichtung zum Ausbilden und/oder Einleiten einer radioaktiven Substanz umfassen, wobei mindestens ein variables Trägersystem zur Aufnahme von variablen Baugruppen, mindestens eine Spritzen-Pumpen-Einheit, mindestens ein Mehrfachventil und eine Prozessorsteuerung vorgesehen sind, und die mindestens eine Spritzen-Pumpen-Einheit und das mindestens eine Mehrfachventil mittels der Prozessorsteuerung ansteuerbar sind. Des Weiteren betrifft die Erfindung alle Syntheseverfahren zum Herstellen von Radiopharmaka und Nukliden in einer flexibel, modular aufgebauten Synthese-Apparatur mit einer Spritzen-Pumpen-Einheit mit den Schritten, Ausbilden und/oder Einleiten einer radioaktiven Substanz, Aufbereiten der radioaktiven Substanz mit mindestens einer Produktionseinrichtung und Ausstoßen der hergestellten Radiopharmaka oder Nuklide, wobei die Verfahrensschritte in der Synthese-Apparatur mittels Pump- und Saugoperationen der Spritzen-Pumpen-Einheit erfolgen. In einer bevorzugten Ausführung der Erfindung wird eine Synthese-Apparatur, bzw. Generator-Bausatz zum Herstellen von Yttrium-90 beschrieben mit mehreren parallel geschalteten homogen beladenen Quellensäulen und je einer in Reihe geschalteten Fängersäule und einer Reinigungssäule.

## Beschreibung

Die vorliegende Erfindung betrifft einen Bausatz zum Herstellen von Radionukliden oder Radiopharmaka mit einem Fluid- und Reagenzientransportsystem sowie Produktionseinrichtungen, die mindestens eine Einrichtung zum Ausbilden und/oder Einleiten einer radioaktiven Substanz umfassen. Des weiteren bezieht sich die Erfindung auf ein Syntheseverfahren zum Herstellen von Nukliden mit einem Radionuklidgenerator.

Kommerziell verfügbare Systeme zur Nuklidproduktion und Radiopharmaka-Päparation verfügen üblicherweise über ein Flüssigkeits- und Reagenzientransportsystem, dass an eine externe Gasversorgung, beispielsweise Stickstoff, Helium oder Argon, angeschlossen ist, wobei das gesamte Produktionssystem oder Teilbereiche desselben unter Druck stehen. Der Transport der Reagenzien und Flüssigkeiten in diesen Systemen erfolgt über den Gasdruck der angeschlossenen Gasversorgung und ist daher im Wesentlichen nur in eine Richtung möglich. Die Reagenzien werden dabei in zumeist vertikal angeordneten Vorratsbehältern vorgehalten, wobei die Vorratsbehälter am Auslassende mit einem kleinen Magnetventil verschlossen sind. Die Zugabe der Reagenzien in eine oder mehrere Produktionseinheiten des Produktionssystems, z.B. Säulen, Mischer, Kartuschen und Reaktoren, erfolgt nach dem Öffnen des oder der zugeordneten MagnetVentils oder -Ventile, im Wesentlichen mittels des Gasdrucks. Auch die während der Herstellung bzw. nach Herstellung benötigten Lösungs- und Reinigungsmittel werden, auch in größeren Mengen, mittels des Gasdrucks der Gasversorgung durch die Produktionseinrichtungen geleitet.

Gegenwärtig sind alle kommerziell erhältlichen Module zur Produktion von Radiopharmaka in ihrer Gesamtheit starr ausgebildet und nur für spezielle Anwendungen oder Syntheseverfahren einsetzbar. Somit können diese Systeme nicht ohne Weiteres bei einem späteren Wechsel der zu produzierenden Radiopharmaka oder Nuklide entsprechend optimal modifiziert werden. Zwar sind Anpassungen durchaus möglich, jedoch stellen diese bei den bisherigen Systeme in der Regel lediglich Notlösungen dar, da sie sich an der vorhandenen Modulkonstruktion orientieren müssen und nicht ein optimales Syntheseverfahren abbilden können.

Beispielsweise wird bei der Herstellung von Yttrium-90 eine Ionenaustauschersäule, bei der auf eine Harzmatrix Strontium-90 aufgetragen ist, mit dem Reagenz Hydroxy-iso-buttersäure (HIBA) versehen, in dem mittels des Gasdrucks aus der Gasversorgung die HIBA-Reagenz aus einem Vorratsgefäß in die Ionenaustauschersäule gefördert wird. In der Ionenaustauschersäule (Quellensäule) entsteht aus dem Strontium-90 (Halbwertszeit ca. 28,5 Jahre) durch radioaktiven Zerfall das kurzlebigere Yttrium-90 (Halbwertszeit ca. 2,7 Tage), das ebenfalls auf der Harzmatrix in der Quellensäule gebunden ist.

Bedingt durch den Zerfall von Strontium-90 und den Zerfall von neu gebildetem Yttrium-90 erreicht das Yttrium-90 in der Quelle nach ca. 7 Tagen ungefähr 84 % seiner Maximalaktivität. Zum Herauslösen des auf der Harzmatrix gebundenen Yttrium-90 werden geeignete Komplexierungsreagenzien, z.B. HIBA, eingesetzt, die selektiv das Yttrium-90 eluieren, während das Strontium-90 auf dem Harz gebunden bleibt, d.h. das HIBA löst nur Yttrium-Kationen aus dem als Kationenaustauscher wirkenden Harz der Säule, nicht jedoch Strontium-Kationen. Demgegenüber löst stark saure Salzsäure sowohl Yttrium-Kationen als auch Strontium-Kationen aus der Harzmatrix. Vor einer weiteren Präparation des Yttrium-90 muss dann jedoch der HIBA-Komplex zerstört und das Nuklid gereinigt werden.

Das in einem Generator in die Ionenaustauschersäule geförderte HIBA eluiert das Yttrium-90 aus der Harzmatrix und wird durch den Gasdruck weiter durch das Flüssigkeits- und Reagenzientransportsystem der Apparatur gefördert. Die Elution des Yttrium-90 kann dabei mit Zählrohren oder anderen geeigneten Betastrahlen-Detektionsverfahren überwacht und der radioaktive Anteil des durchgeleiteten HIBA fraktioniert, d.h. vom Vor- und Nachlauf separiert und gesondert aufgefangen werden. Die gesondert aufgefangene radioaktive Fraktion wird durch die manuelle Zugabe einer Säure, insbesondere konzentrierter Salzsäure, angesäuert (bevorzugt bis zu einem pH-Wert von 1), wodurch der anionische Yttrium-Komplex zerstört wird und sich Yttriumchlorid bildet.

Anschließend wird die angesäuerte Fraktion manuell auf eine Reinigungsaustauschersäule überführt. In der Reinigungssäule treten nun die Yttrium-Kationen mit der Harzmatrix der Reinigungssäule in Wechselwirkung und werden vom Harz zurückgehalten. Dabei ist das Harz der Quellensäule und der Reinigungssäule üblicherweise identisch. Die Reinigungsaustauschersäule wird nachfolgend mit verdünnter Salzsäure gewaschen, um die Reaktionslösung mit möglicherweise enthaltenen HIBA-Resten von den durch die Wechselwirkung mit der Harzmatrix in der Reinigungssäule zurückgehaltenen Yttrium-Ionen zu trennen. Anschließend wird die Reinigungssäule mit einer stark sauren Salzsäure eluiert, wodurch die Wechselwirkung des freien Yttriums mit dem Kationenaustauscherharz in der Reinigungssäule gelöst wird. Auch diese Elution wird wiederum fraktioniert und die radioaktive Fraktion eingekocht. Der beim Verdampfen zurückbleibende Yttrium-90-Rückstand wird in einer schwachen Salzsäure aufgenommen. In Verbindung mit der schwachen Salzsäure befindet sich das Yttrium-90 in einer für weitere Reaktionen geeigneten Form.

Bei der Herstellung von lonenaustauschersäulen zur Nuklidproduktion und Radiopharmakapräparation in herkömmlichen Generatoren wird üblicherweise das Mutternuklid - bei der Yttrium-90-Produktion das Strontium-90 - auf eine Vertikal installierte, mit Harz gefüllte Säule aufgetragen. Es führt zu einer Konzentration des Mutternuklids in einem relativ engen Anfangsbereich der vertikal angeordneten Säule, während im unteren Abschnitt der Säule nur die Harzmatrix vorliegt.

Bei herkömmlichen Modulen zur Produktion von Yttrium-90-Nukliden wird die lonenaustauschersäule üblicherweise nur einmal pro Woche eluiert, da sich erst nach ca. 7 Tagen das Yttrium-90 in ausreichender Menge, d.h. über 80 % der Maximalaktivität, gebildet hat. Zeitliche Abweichungen der Entladung der Quellensäule können zu einer starken Reduktion des Wirkungsgrades des Endprodukts führen. Bedingt durch diese Einschränkungen des Herstellungsverfahrens wird von den Firmen, die Yttrium-90-Präparate anbieten, üblicherweise nur einmal pro Woche produziert. Bei Anbietern in den USA erfolgt die Herstellung des Yttrium-90 üblicherweise am Freitag, um über das Wochenende einen Transport nach Europa zu ermöglichen. Bedingt durch die kurze Halbwertszeit des Yttrium-90 (ca. 2,7 Tage) ist bei einer Produktion am Freitag am Montag bereits jedoch ca. 50 % des Yttrium zerfallen. Wird Yttrium-90 erst Mittwochs benötigt wird, muss beispielsweise Freitags zuvor nahezu das vierfache der benötigten Menge abgefüllt (und somit auch zumindest teilweise vom Kunden bezahlt) werden.

Die bisher eingesetzten Verfahren und Vorrichtungen zum Herstellen von Nuklid- und Radiopharmakaprodukten erfordern erhebliche manuelle Eingriffe des Personals. Dies führt einerseits gerade im Routinebetrieb zu einer erheblichen Strahlenbelastung und birgt das Risiko von leichten Variationen des Herstellprozesses, aber auch von unkontrollierten Arbeitsabläufen. Da der Prozess abhängig von der Sorgfalt des Bedienpersonals und Problemen ist, die vom Personal unentdeckt oder unbeachtet bleiben, kann die Reproduzierbarkeit der Produktion erheblichen Schwankungen unterliegen. Die Notwendigkeit manueller Eingriffe verhindert oder erschwert eine aus arbeitsrechtlichen Gründen und für eine Produktzulassung notwendige Dokumentation der Arbeitsabläufe.

Die Aufgabe der vorliegenden Erfindung ist daher, die bei der Herstellung von Nuklidprodukten und Radiopharmakapräparationen benötigten manuellen Eingriffe in den Prozessablauf zu reduzieren, um so insbesondere eine automatisierte Abfolge der Prozessschritte zu ermöglichen, und eine zulassungsfähige Dokumentation, beispielsweise nach GMP (Good Manufacturing Practice), zu ermöglichen.

Diese Aufgabe wird bei einem gattungsgemäßen Modul-Bausatz zum Herstellen von Radiopharmaka und Nukliden dadurch erreicht, dass mindestens ein variables, steckbares Trägersystem zur Aufnahme von variablen Baugruppen, insbesondere Säulen, Heizern, Ventilen, Reaktoren, Mixern, mindestens eine Spritzenpumpen-Einheit, mindestens ein Mehrfachventil und eine Prozessorsteuerung vorgesehen sind, wobei die mindestens eine Spritzen-Pumpen-Einheit und das mindestens eine Mehrfachventil mittels der Prozess-Steuerung ansteuerbar sind.

Die durch die Prozessor-Steuerung angesteuerte Spritzen-Pumpen-Einheit und das Mehrfachventil ermöglichen die automatisierte Abfolge der notwendigen Prozessschritte, indem über das Mehrfachventil mittels der Spritzen-Pumpen-Einheit entsprechende Reagenzien aus zugeordneten Vorratsgefäßen angesaugt und anschließend über das entsprechend geschaltete Mehrfachventil den jeweiligen Produktionseinrichtungen zugeführt werden kann. Mittels der Prozessor-Steuerung können durch die Spritzen-Pumpen-Einheit äußerst exakte Mengen bzw. Volumina angesaugt und gefördert werden, wobei sowohl die Geschwindigkeit als auch die Gleichmäßigkeit des Volumenstroms genau einstellbar sind. Darüber hinaus ermöglicht die Ansteuerung durch die Prozessor-Steuerung eine Kontrolle des Prozessablaufs, so dass Abweichungen und Fehler in den Arbeitsabläufen verhindert werden, und eine zulassungsfähige Dokumentation der Prozessabläufe möglich ist. Dabei ermöglicht das variable, steckbare Trägersystem die einfache Aufnahme variabler Baugruppen, wobei bei einer Verwendung eines einheitlichen Rastermaßes eine kompakteste Bauweise und ein Austausch der Baugruppen untereinander möglich ist. Im Gegensatz zu den bekannten Systemen zur Produktion von Nukliden und Radiopharmaka aus einem primären radioaktiven Material können mit dem erfindungsgemäßen Modul-Bausatz neben fördemden Vorgängen auch saugende Operationen durchgeführt werden, wobei die Flüssigkeitsmenge genau dosiert und die Geschwindigkeit der Förderung variabel auf jeden Schritt im Verfahrenslauf optimierbar ist. Im Gegensatz zu gasdruckbetriebenen Apparaturen ermöglichen die Pump- und Saug-operationen der Spritzen-Pumpen-Einheit eine aktive Dosierung der Reagenzien unabhängig von Gasdruck bzw. unterschiedlichen Drücken im Fluid- und Reagenzientransportsystem, d.h. auch drucklose Reaktoren und Generatoren sind durch den Einsatz der Spritzen-Pumpen-Einheit möglich.

Bevorzugt kann jeweils eine Spritzen-Pumpen-Einheit und ein Mehrfachventil als eine einzige Produktionseinrichtung (Motorbürette) ausgebildet sein. Die Ausbildung als gemeinsames Bauteil ermöglicht ein kompakteres Design mit geringeren Toträumen, die direkte Selektierung der Reagenzien bzw. der Lösungs- und Reinigungsmittel am Spritzenansatz der Spritzen-Pumpen-Einheit, beispielsweise mit einem inerten 8-Wege-Selektionsventil und sogar eine nahezu totvolumenfreie Reinigung. Derartige Motorbüretten ermöglichen somit maximale Funktionalität auf kleinstem Raum. Durch die austauschbaren Spritzen der Spritzen-Pumpen kann in jeder beliebigen Positionen des Selektionsventils angesaugt und ausgestoßen werden kann. Neben der Flüssigkeitsförderung durch die Spritzen-Pumpen-Einheit kann zudem bei Bedarf auch noch selektiv mit steriler Luft operiert werden, beispielsweise über einen Steril-Filter, der an einem Port des Mehrfachventils positioniert ist.

Je nach Komplexität des Herstellprozesses der Radionuklide und Radiopharmakapräparationen können als weitere Produktionseinrichtungen eine Reinigungs-, Verarbeitungs- und/oder Ausstoßeinheit vorgesehen sein. Dabei können insbesondere Quellen- und Reaktionseinheiten abgeschirmt ausgebildet sein, beispielsweise mit einer dreifachen Abschirmung aus 5 mm Kunststoff. Auch können Reaktionssäulen und -kammern mit variablen Stempeln ausgerüstet sein, um eine Anpassung an für den jeweiligen Herstellungsprozess optimale Volumina zu ermöglichen.

Eine vorteilhafte Ausgestaltung sieht vor, dass die Produktionseinrichtungen als variable Baugruppen zur Aufnahme in das variable, steckbare Trägersystem ausgebildet sind. Die Ausbildung als austauschbare Baugruppe ermöglicht es, die einzelnen Produktionseinrichtungen unabhängig vom Synthesemodul selbst auszutauschen und erhöht somit die Standzeit des Gesamtsystems.

Günstigerweise kann das Trägersystem mindestens eine Montage- und Grundplatte sowie mindestens eine Profilschiene aufweisen, wobei die Profilschiene an der Montageplatte anbringbar und zum Aufnehmen der variablen Baugruppen oder der Produktionseinrichtungen ausgebildet sein. Durch die Aufnahme der Produktionseinrichtungen in den Profilschienen lassen sich die Grundelemente des Modulbausatzes normieren und sind dadurch flexibel kombinierbar und auf der Montageplatte anbringbar. So kann ein relativ komplexes System zum Herstellen,von Radiopharmaka und Nukliden auf kleinstem Raum realisiert werden. Bei einer Ausbildung der Reaktoren der verschiedenen Produktionseinrichtungen mit gleichen oder annähernd gleichen Durchmesser lässt sich die Anzahl der Profilschienen-Varianten reduzieren, sogar bis auf eine Variante. Besonders vorteilhaft ist es, wenn die Montageplatte und die Profilschienen mittels eines einfachen Stecksystems verbindbar sind. Reparaturen an einem radioaktiv kontaminierten Generatorsystem, was nach einer Beladung eines Moduls nie gänzlich auszuschließen ist, aber auch der Austausch von Produktionseinrichtungen, insbesondere von Quellensäulen, sind problematisch, da sie zu hohen radioaktiven Belastungen des Bedienpersonals führen, das die Modifikationen oder Reparaturen vornehmen muss. Die Anordnung der Produktionseinrichtungen über Profilschienen an eine Montageplatte verringert die notwendige Zeit, die das Bedienpersonal für die Arbeiten am Synthesemodul benötigt. Stecksysteme, die ggf. mit geeigneten Manipulatoren zu handhaben sind, reduzieren die notwendige Kontaktzeit weiter bzw. ermöglichen eine automatisierte Handhabung von Reparaturen und Umbauarbeiten am Generator bzw. Modul. Durch den Aufbau des Modulbausatzes auf kleinstem Raum können insbesondere Systeme zur Produktion von Radiopharmaka in hohen Aktivitäten in sogenannten Heißen Zellen kompakter und daher preiswerter realisiert werden, da der kostenintensive, gesicherte Raum hinter geeigneten Abschirmungen minimiert werden kann.

Dabei können die Montage- und Grundplatte und die Profilschienen aus Aluminium, bevorzugt eloxiertem Aluminium, hergestellt sein. Aluminium ist leicht bearbeitbar und ermöglicht so in einfacher Weise die Integration der Produktionseinrichtungen in die Profilschienen. Darüber hinaus ist Aluminium ein leichter und widerstandsfähiger Werkstoff, der die Handhabung, insbesondere auch beim Einsatz von Manipulatoren, erleichtert, und der im Vergleich zu anderen möglichen Werkstoffen nur wenig Bremsstrahlung erzeugt, insbesondere bei der Herstellung von Yttrium-90 aus Strontium-90, da das Auftreten der Bremsstrahlung bei einer Wechselwirkung mit der Betastrahlung einer Quelle von der Ordnungszahl des Materials abhängig ist, mit dem es in Wechselwirkung steht. Durch die Eloxierung des eingesetzten Aluminiums können die Montageplatte und die Profilschienen außerdem bedingt säure- und lösungsmittelfest ausgebildet werden.

Eine zweckmäßige Ausführungsform sieht vor, dass das Fluid- und Reagenzientransportsystem aus mehreren Komponenten besteht, und die Komponenten mittels eines Stecksystems oder einem variablen Montagesystem miteinander verbindbar sind. Ein derartiges Stecksystem erleichtert das Verbinden der Produktionseinrichtungen miteinander und mit den Komponenten des Fluid- und Reagenzientransportsystems, z.B. Ventile, Kupplungen, Adapter, Verbindungsleitungen (Kapillare) sowie Flaschen und Vorratsbehälter. Dabei kann das Stecksystem in einfacher Weise aus Fittingen und Verschraubungen mit und ohne Schneidringe bzw. Verule ausgebildet sein.

Zur integrierten Erzeugung der gewünschten radioaktiven Substanz in den Generator aus einem primären radioaktiven Material kann die mindestens eine Einrichtung zum Ausbilden und/oder Einleiten einer radioaktiven Substanz als Generatorsäule bzw. Quellensäule ausgebildet sein.

Eine weitere Ausbildung des Generatorbausatzes sieht vor, dass die Generatorsäule mindestens zwei parallel geschaltete Quellensäulen für das Ausbilden der Radioaktiven Substanz umfasst. Die Merkmalskombination des Anspruchs 9 könnte auch unabhängig von einem der Ansprüche 1 bis 7 Schutz genießen und selbständig für einen gattungsgemäßen Modulbausatz in Kombination mit dem Merkmal des Anspruchs 8 weiterverfolgt werden. Ein Generator mit einer einzigen Quellensäule, unabhängig davon, ob die Quellensäule herkömmlich oder homogen beladen ist, kann sinnvoll nur in gewissen Zeitabständen, abhängig davon, ob die gewünschte Aktivität der radioaktiven Substanz in der Quelle erreicht ist, eluiert werden. Beispielsweise erreicht eine mit Strontium-90 präparierte Quellensäule erst nach ca. 7 Tagen eine ausreichende Aktivität, d.h. eine hinreichende Menge, des Yttrium-90 (üblicherweise ca. 80 % der Maximalaktivität). Zeitliche Abweichungen von solchen durch den Verfallsprozess des primären radioaktiven Materials vorgegebenen Zeitprofils können zu einer starken Reduktion des Wirkungsgrads der hergestellten Radiopharmaka oder Nukliden führen. Demgegenüber kann durch eine Generatorsäule mit mindestens zwei parallel geschalteten Quellensäulen der zeitliche Abstand zwischen den einzelnen Produktionen der Radiopharmaka und Nukliden deutlich reduziert werden, wenn die zwei parallel geschalteten Quellensäulen entsprechend zeitlich versetzt beladen/entladen wurden. Mehrere parallel geschaltete Quellensäulen ermöglichen so eine bessere Ausnutzung und Produktivität der gesamten Anlage und entsprechend dadurch geringere Herstellungskosten. Neben der Reduzierung der Herstellungskosten ermöglicht dies insbesondere bei Präparaten mit geringer Halbwertszeit die Bereitstellung von Radiopharmaka- und Nuklidprodukten mit ausreichender Aktivität. Bei der Herstellung von Yttrium-90 bietet sich beispielsweise an, sechs mit Strontium-90 beladene Säulen parallel in einem einzigen Modulbausatz zu schalten und jede Quellensäule einmal pro Woche an einem anderen Werktag zu eluieren. Die Parallelschaltung mehrerer Quellen in einem System ermöglicht neben der mehrfachen Ausbeute bei nahezu gleichem apparativem Aufwand und Platzbedarf des weiteren eine einfachere Reparatur und Wiederinstandsetzung sowie eine selektive Entsorgung und Recycling, insbesondere bei einer Trennung der Quellensäule von der Fängersäule und nachgeschalteten Reinigungseinheiten.

Von Vorteil ist es weiter, dass ein primäres radioaktives Material und die Harzmatrix homogen in der Generatorsäule oder in mindestens einer Quellensäule beladen sind. Oft wird in herkömmlichen Herstellungsverfahren das primäre radioaktive Material, z.B. das Mutternuklid Strontium-90 auf eine vertikal installierte, mit der Harzmatrix gefüllten Quellensäule aufgetragen, was zu einer Konzentrierung des primären Materials in einem kleinen Bereich der Quelle führt, üblicherweise über wenige Millimeter des oberen Abschnittes der Quellensäule.

Die Konzentration des primären radioaktiven Materials in dem relativ engen Anfangsbereich der Säule kann, selbst bei dem Auftrag einer üblichen Dosis, z.B. Strontium-90 mit einer Aktivität von 1,8 bis 3,7 x 10¹⁰ Bq (Becquerel - Anzahl der Zerfälle pro Sekunde) für die Bildung von Yttrium-90, über die Gesamtlaufzeit der Quellensäule zu starken radiolytischen Zersetzungen der Trägermatrix und damit zu verminderten Standzeiten der Generatorsäule kommen. Bei einem in der Harzmatrix homogen verteilten primären radioaktiven Material kann eine solche radiolytische Zersetzung signifikant reduziert werden.

Eine weitere Ausbildung des Modulbausatzes sieht unabhängig von dessen Kennzeichen vor, dass die Generatorsäule mindestens eine Quellensäule und eine Fängersäule aufweist, wobei Quellensäule und Fängersäule jeweils mit einer Harzmatrix versehen sind. Wenn im Falle einer singulären Generatorsäule, d.h. bei einer Quelle zur Herstellung der gewünschten radioaktiven Substanz ohne eine nachgeschaltete Fängersäule, ein sogenannter Durchbruch der Quelle, d.h. ein Austritt des primären radioaktiven Materials aus der Quelle, auftritt, so wird auch der Teil des Generators, der zur Aufbereitung der radioaktiven Substanz für die Herstellung der Radiopharmaka oder des Nuklidprodukts dient, mit dem primären radioaktiven Material kontaminiert und kann daher nicht weiter verwendet werden. Bei einem Generatorsystem mit einer Quellensäule und einer der Quellensäule nachgeschalteten Fängersäule kann jedoch das in einer Elution möglicherweise gelöste primäre radioaktive Material in der Harzmatrix der Fängersäule fixiert werden und so eine Kontaminierung des zur Aufbereitung der radioaktiven Substanz benötigten Teils des Generatorbausatzes verhindert werden.

Ein vorteilhafte Ausführung sieht vor, dass die Prozessor-Steuerung ereignisorientiert ausgebildet ist. Die Merkmalskombination des Anspruchs 11 könnte auch unabhängig von einem der Ansprüche 1 bis 10 Schutz genießen und selbständig weiterverfolgt werden. Eine ereignisorientierte Prozessor-Steuerung ermöglicht die Steuerung des gesamten Systems durch ein intelligentes Prozessleitsystem, bei dem die Fraktionierung des beladenen Eluats, aber auch die Reinigung ereignisorientiert ausgeführt werden können und nicht ausschließlich zeitgesteuert erfolgen. Die ereignisorientierte und möglicherweise zusätzlich, zumindest teilweise zeitgesteuerte Prozessorsteuerung ermöglicht auch bei vorgegebenen Produktanforderungen eine vollautomatische Steuerung und Herstellung von Radiopharmaka und Nukliden und dadurch auch eine vollständige Dokumentation aller Prozessabläufe, was für bestimmte Zulassungen unabdingbar ist. Zusätzlich können in die Prozessesteuerung eingearbeitete Logikvorgaben verhindern, dass irrtümlich falsche Programmierungen der Steuerung zu einem unbeabsichtigten Austritt von Radioaktivität oder einer Zerstörung der Generatoreinheit bzw. des Moduls führen. Vorteilhafterweise können in der ereignisorientierten Prozessor-Steuerung In-Prozess Mess- und Detektionssysteme, insbesondere Aktivitätsdetektoren (z.B. Geiger-Müller Zählrohre) und/oder kapazitive Sensoren vorgesehen und mit der Prozessor-Steuerung gekoppelt sein. Derartige Sensoren ermöglichen im Rahmen einer ereignismarkierten Steuerung, dass in einem gewissen Abschnitt des Modulbausatzes zu einem vorgegebenen Zeitraum detektiert wird, ob eine Flüssigkeit und/oder eine Aktivität vorliegt, wodurch Folgeschritte entsprechend gesteuert werden. Beispielsweise werden Ventile oder andere Komponenten nur aktiviert, wenn in einem bestimmten Prozessabschnitt eine Radioaktivität erscheint bzw. eine Flüssigkeit vorliegt. Das Modulsystem kann so selbständig auf Änderungen der Aktivität des Eluats reagieren und erreicht dabei maximale Ausbeuten bei kleinstmöglichem Reagenzieneinsatz.

Die vorliegende Erfindung betrifft weiter ein Syntheseverfahren zum Herstellen von Radiopharmaka und Nukliden in einem Modul mit einer Spritzen-Pumpen-Einheit mit folgenden Schritten: Ausbilden und/oder Einleiten einer radioaktiven Substanz; Aufbereiten der radioaktiven Substanz in mindestens einer Produktionseinrichtung; Ausstoßen der hergestellten Radiopharmaka oder Nuklide. Dabei erfolgen die Verfahrensschritte in dem Modul mittels Pump- und Saug-Operation der Spritzen-Pumpen-Einheit. Mittels dieser Pump- und Saug-Operationen kann in dem Syntheseverfahren jede Flüssigkeitsmenge genau dosiert werden, wobei auch die Geschwindigkeit der Förderung variabel und damit auf den jeweiligen Prozessschritt im Verfahrensablauf optimierbar ist.

Eine Variante des Syntheseverfahrens sieht vor, dass das Herstellen von Yttrium mit folgenden Schritten erfolgt: Bilden des Yttrium in einer Generatorsäule aus einem primären radioaktiven Material; Eluieren des Yttrium aus der Generatorsäule; Aufbereiten des Eluats; und Ausstoßen des Yttrium-Endprodukts. Dabei basiert die Yttrium-90-Synthese auf dem Zerfall des Strontium-90, das üblicherweise als primäres radioaktives Material in der Generatorsäule eingesetzt wird, und der nachfolgenden Säureelutionen des Yttrium aus der Generatorsäule.

Eine bevorzugte Ausführungsform des Syntheseverfahrens sieht vor, dass die Generatorsäule mindestens eine Quellensäule und eine Fängersäule umfasst und in der Quellensäule aus dem primären radioaktiven Material Yttrium gebildet wird, wobei das Eluieren des Yttrium aus der Generatorsäule die folgenden Schritte umfasst: Eluieren des Yttriums aus einer Quellensäure, Verhindern eines Durchtritts von primärem radioaktivem Material in einen nachfolgenden Aufbereitungsbereich in einer Fängersäule; und Fraktionieren des yttriumhaltigen Eluats vom Vor- und Nachlauf. Durch die Fixierung von primärem radioaktivem Material, d.h. Strontium-90, in der Fängersäule, kann ein sogenannter Durchbruch der Quellensäule in den nachgeschalteten Bereich des Verfahrens zum Aufbereiten des Eluats verhindert werden. Bei diesem Syntheseverfahren kann die mindestens eine Quellensäule jenseits des Eluieren des Yttriums täglich gespült werden, beispielsweise mit Wasser, um freie Radikale in der Quellensäule herauszuspülen und die Radiolyse zu reduzieren. Das Eluieren des Yttriums erfolgt bei einer mit Strontium-90 konditionierten Quellensäule mittels einer geeigneten Komplexierungsreagenz, z.B.

Hydroxy-iso-buttersäure (HIBA), wobei vor dem eigentlichen Eluieren bevorzugt eine Konditionierung der Fängersäule mit derselben Reagenz erfolgt.

Um ein zeitlich versetztes Syntheseverfahren und/oder eine Synthese in kürzeren Zeitabständen zu ermöglichen, kann die Generatorsäule mindestens zwei parallel geschalteten Quellensäulen umfassen, in denen aus dem primären radioaktiven Material die radioaktive Substanz zum Herstellen von Radiopharmaka und Nukliden gebildet wird. Die Merkmalskombination des Verfahrensanspruchs 17 könnte auch unabhängig von einem der Ansprüche 15 und 16 Schutz genießen und selbständig weiterverfolgt werden. Die Nutzung mehrerer parallel geschalteter Quellensäulen ermöglicht die Erhöhung der Elutionsfrequenz der Verfahren ohne die Aktivität des erzeugten Produkts zu verschlechtern.

Ein Bevorzugtes Syntheseverfahren sieht vor, dass das primäre radioaktive Material homogen in der Quellensäule verteilt ist, wobei die Herstellung der homogenen Verteilung die folgenden Schritte umfasst: Herstellen eines Breis aus einer Harzmatrix und verdünnter Salpetersäure; Vorlegen des Breis in die Quellensäule und Absetzen der Harzmatrix; Ausbilden eines Lehrvolumens in der Quellensäule durch Trennen der Salpetersäure von der Harzmatrix; Beladen der Harzmatrix mit einer primär radioaktiven Substanz; homogene Verteilung der primären radioaktiven Substanz in der Harzmatrix durch vollständige Durchmischung der Harzmatrix in der Quellensäule; und Kompression der Harzmatrix zur Eliminierung des Leervolumens. Das Verfahren nach Anspruch 16 könnte auch unabhängig von einem der Ansprüche 13 bis 15 Schutz genießen und selbständig weiterverfolgt werden. Eine standardmäßige Aufgabe des primären radioaktiven Materials auf einen lonenaustauscher, z.B. eine Hartmatrix, führt gegenüber diesem erfindungsgemäßen Verfahren üblicherweise zu einer starken Konzentration der Gesamtaktivität im Anfangsbereich der Quellensäule. Das vorliegende Verfahren zur Herstellung der homogenen Verteilung verwendet einen Brei aus einem Teil einer geeigneten Harzmatrix und zwei Teilen verdünnter Salpetersäure, der sich zunächst in einer aufrecht stehenden Quellensäule absetzt. Nach dem Absetzen kann die Salpetersäure von der Harzmatrix getrennt werden und die in der Quellensäule verbleibende Harzmatrix mit einem primären radioaktiven Material beladen werden. Die homogene Verteilung mit dem primären radioaktiven Material, hier Strontium-90, erfolgt bevorzugt in einer Bewegungsmechanik, in der die Harzmatrix mehrmals vollständig durchmischt wird, was zu einer homogenen Verteilung des primären radioaktiven Materials im Harz führt.

Eine Modifikation des Syntheseverfahrens zum Herstellen von Yttrium sieht vor, dass nach dem Eluieren des Yttriums aus der Generatorsäule ein oder mehrere der folgenden Arbeitsschritte folgen: Mischen des Eluats mit einer Säule in einem Mischer, und Reinigen des Eluats oder des Eluats-Säure-Gemischs in einer Reinigungssäule. Dabei wird zum Mischen des Eluats bevorzugt konzentrierte Salzsäure verwendet, wobei als Vorlage im Mischer ebenfalls die zum Mischen verwendete Säure eingesetzt werden kann. Durch die Säure wird in dem Mischer der anionische Yttrium-Komplex des Eluats zerstört und Yttrium-Chlorid gebildet.

Eine weitere Verfahrensausführung sieht vor, dass das Aufbereiten des Eluats einen oder mehrere der folgenden Schritte umfasst: kontinuierliche Verdampfung des Eluats oder des Eluat-Säure-Gemisches in einem Reaktor, bevorzugt einem Festbettreaktor und Absetzen des Yttriums im Reaktor; Kühlen des Reaktors; Lösen und Verwirbeln des fraktionierten Yttriums in dem Reaktor, bevorzugt in verdünnter Salzsäure. Die kontinuierliche Verdampfung des Eluats ermöglicht eine einfache und im wesentlichen rückstandsfreie Trennung des Yttriums-90 vom Säureträger des Eluats, wobei das Yttrium sich an den inneren Reaktorwänden absetzt. Zum Verdampfen des Eluats kann beispielsweise ein Teflon-Festbett-Reaktor eingesetzt werden. Bei der kontinuierlichen Verdampfung wird der Festbettreaktor typischerweise auf die Endtemperatur des Verdampfungsprozesses (für Salzsäure-Eluat 130°) vorgeheizt und anschließend das Eluat so langsam hinzudosiert, dass es beim ersten Kontakt verdampft. Diese Vorgehensweise ermöglicht, dass nur extrem kleine Reaktorflächen mit der radioaktiven Substanz belegt werden und es zu keinen Siedeverzügen, respektive Ausstoß von radioaktivem Material kommt. Kleine, mit der zum Herstellen von Radiopharmaka und Nukliden gewünschten radioaktiven Substanzen belegte Reaktorflächen ermöglichen eine ideale Ausbeute beim anschließenden Lösen der Substanz aus dem Reaktor.

Eine Verfahrensvariante sieht das Herstellen von C-11-Methionin (Kohlenstoff-11-Methionin) vor mit den folgenden Schritten: Befüllen einer Produktionseinrichtung, bevorzugt einer Reaktionssäule mit einem geeigneten Reaktionsmedium, bevorzugt, Aluminiumoxid mit Desmethylmethionin in Ethanol mittels der Spritzen-Pumpen-Einheit; Einleiten von C-11-Methyliodid in das Synthesemodul, bevorzugt mittels eines Helium-Stroms; Durchleiten des C-11-Methyliodid-Stroms durch das Reaktionsmedium in der Produktionseinrichtung; Reaktion des C-11-Methyliodids mit dem Reaktionsmedium; Absaugen des Reaktionsmediums mit dem gebildeten Produkt aus der Produktionseinrichtung mittels der Spritzen-Pumpen-Einheit; und Ausstoßen des gebildeten Produktes in ein Produktgefäß mittels der Spritzen-Pumpen-Einheit. Das in das Synthesemoudl eingeleitete C-11-Methyliodid-Strom kann mittels eines Helium-Stromes (50 bis 100 ml) aus einem Zyclotron, in dem durch Bestrahlung und nachfolgende chemische Konversionen das C-11-Methyliodid entstanden ist, in den Generator gelangen. Das Ausstoßen des Produktes in ein Produktgefäß kann bevorzugt über geeignete Kartuschen und Sterilfilter erfolgen. Nach dem eigentlichen Syntheseverfahren kann die verwendete Vorrichtung durch entsprechende Pump- und Saugoperationen der Spritzen-Pumpen-Einheit, beispielsweise mit Ethanol, gespült werden und anschließend durch Stickstoff trocken geblasen werden.

Eine weitere Verfahrensvariante sieht das Herstellen von C-11-Cholin (Kohlenstoff-11-Cholin) vor mit folgenden Schritten: Befüllen einer Produktionseinrichtung, bevorzugt mit einer Kartusche, mit einem geeigneten Reaktionsmedium, bevorzugt Diaminoethanol; Einleiten von C-11-Methyliodid in den Generator, bevorzugt mittels eines Heliums-Stroms; Durchleiten eines C-11-Methyliodid-Stroms durch die Produktionseinrichtung; Reaktion des C-11-Methyliodid mit dem Reaktionsmedium, Bildung von C-11-Cholin in der Produktionseinrichtung; Spülen der Produktionseinrichtung, bevorzugt zunächst mit Ethanol und anschließend mit Wasser, mittels der Spritzen-Pumpen-Einheit; Ausspülen des C-11-Cholin aus der Produktionseinrichtung mit einem Trägermedium, bevorzugt einer Kochsalzlösung, mittels der Spritzen-Pumpen-Einheit; und Ausstoßen des mit C-11-Cholin beladenen Trägermediums in ein Produktgefäß mittels der Spritzen-Pumpen-Einheit. Auch hier gelangt wiederum der C-11-Methyliodid-Strom nach der Bestrahlung in einem Zyclotron durch nachfolgende chemische Konversionen im Gasstrom in die Produktionseinrichtung. Des weiteren ist ebenfalls ein Nachspülen des Generators mit Ethanol sowie ein Trockenblasen mit Stickstoff mittels der Spitzen-Pumpen-Einheit vorgesehen.

Ein weiteres Syntheseverfahren ist das Herstellen einer Gallium-Elution, möglich mit folgenden Schritten: Befüllen eines Mischers mit einem geeigneten Reaktionsmedium, bevorzugt konzentrierte Salzsäure; Durchleiten eines Reaktionsmediums, bevorzugt verdünnte Salzsäure durch eine Generatorsäule mit einem primären radioaktiven Material, insbesondere eine Germanium-Quelle, mittels der Spritzen-Pumpen-Einheit; Einleiten des mit Gallium beladenen Reaktionsmediums in den Mischer; Durchmischen des Reaktionsmediums im Mischer mittels durch die Spritzen-Pumpen-Einheit geförderte Luft; Herausdrücken des Reaktionsmediums aus dem Mischer über eine Produktionseinrichtung, bevorzugt eine Kartusche, in ein Abfallgefäß mittels durch die Spritzen-Pumpen-Einheit geförderter Luft, hierbei Beladung der Produktionseinrichtung mit Gallium; Ausspülen des Gallium aus der Produktionseinrichtung mit einem Trägermedium, bevorzugt Wasser, und Ausstoßen des mit Gallium beladenen Trägermediums in ein Produktgefäß mittels der Spitzen-Pumpen-Einheit.

Im Folgenden werden anhand der Zeichnungen mehrere Ausführungsformen des erfindungsgemäßen Modulbausatzes und des Sytheseverfahrens näher erläutert. Es zeigen:
- Fig. 1: eine schematische Ansicht eines Yttrium-90-Modulbausatz;
- Fig. 2: Aktivitätsprofile mehrerer Yttrium-90-Quellen;
- Fig. 3 a: Vergleich einer herkömmlichen Beladung einer Quellensäule mit einer Beladung mit Homogenisation;

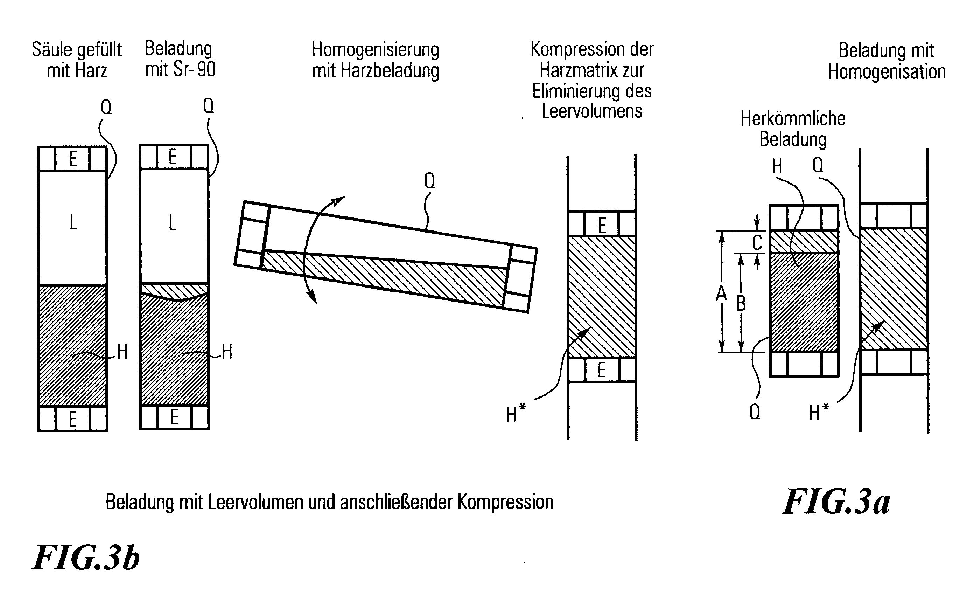

- Fig. 3 b: Beladung mit Homogenisation einer Quellensäule mit einem primären radioaktiven Material;

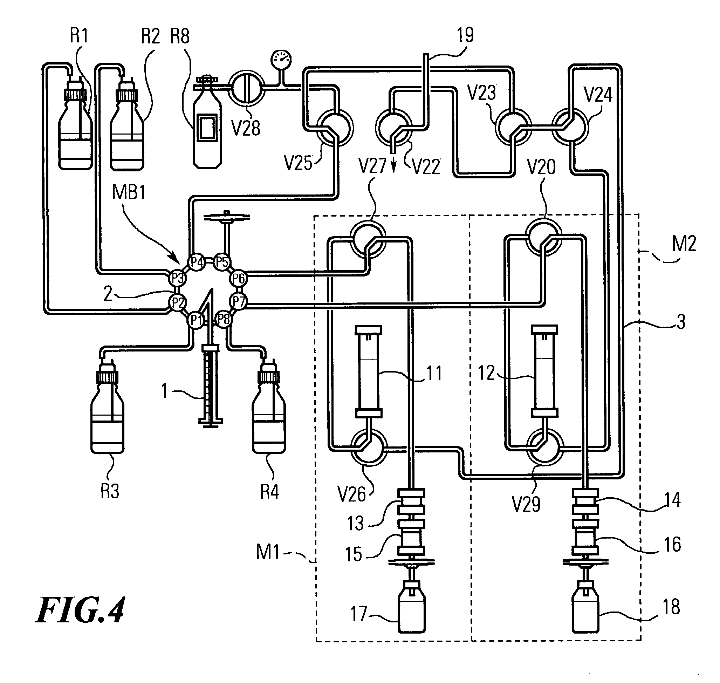

- Fig. 4: eine schematische Ansicht eines Modulbausatzes zur Herstellung von C-11-Methionin;

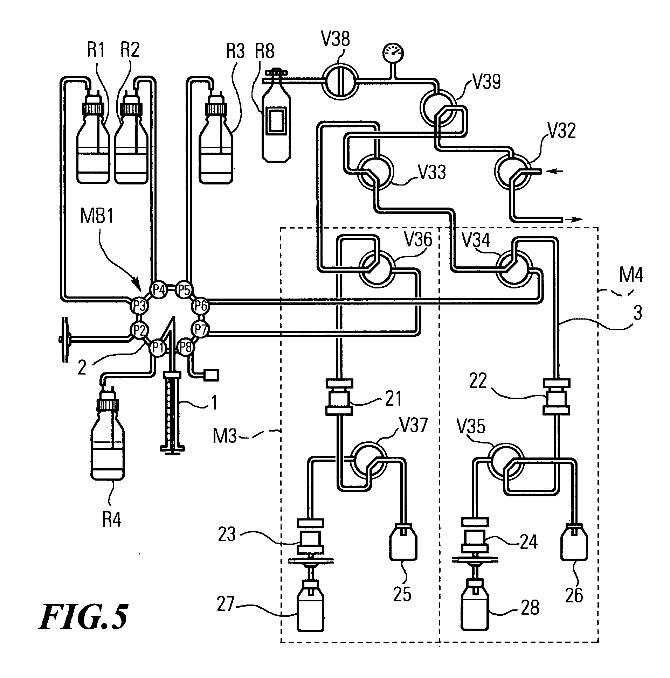

- Fig. 5: eine schematische Ansicht eines Modulbausatzes zur Herstellung von C-11-Cholin;

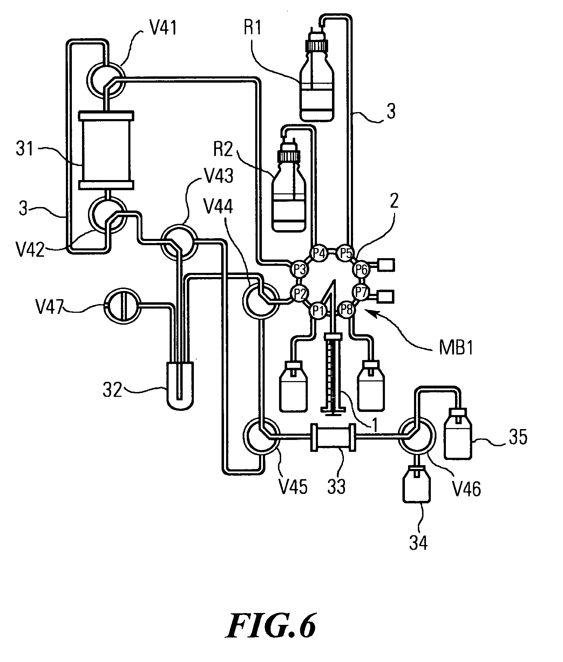

- Fig. 6: eine schematische Ansicht eines Modulbausatzes zur Herstellung von Gallium-68, und

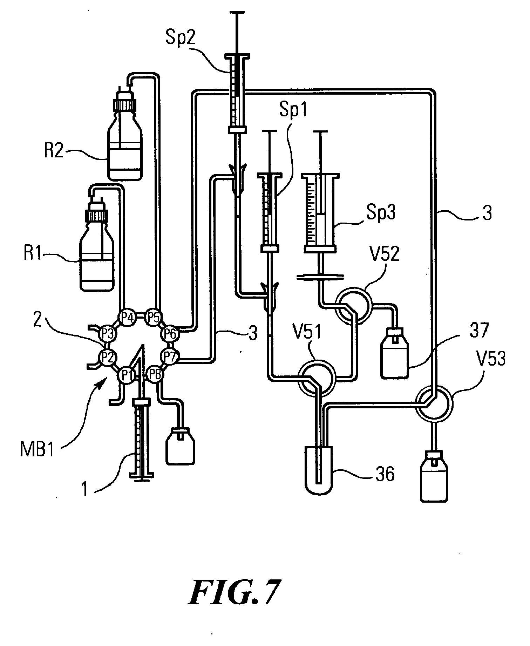

- Fig. 7: eine schematische Ansicht eines Modulbausatzes zur Herstellung von Metallmarkierungen (mit Lu-177, Y-90, Ga-68).

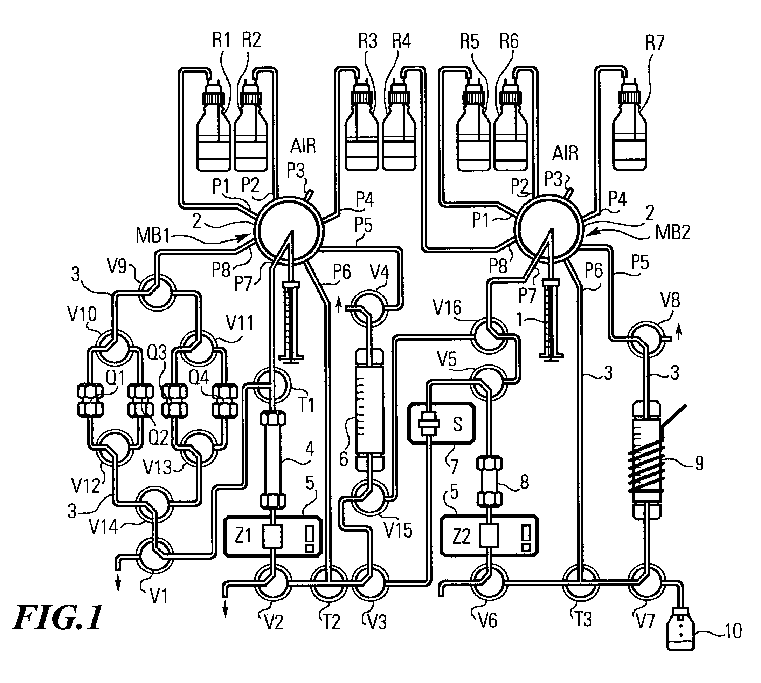

Der in Fig. 1 schematisch dargestellte Modulbausatz dient insbesondere zur Herstellung von Yttrium-90. Dieser Bausatz besteht dabei aus zwei Motorbüretten MB1 und MB2 mit jeweils einer Spritzen-Pumpen-Einheit 1 sowie einem Mehrwegeventil 2 mit 8 selektiv anwählbaren Ausgängen (Port) P1 bis P8 und einem Spritzeneingang, sowie einem an die Motorbüretten MB1 und MB2 angeschlossenen Fluid- und Reagenzientransportsystem und mehreren Produktionseinrichtungen. Die Anschlüsse P1, P2 und P4 der Motorbürette MB1 sowie die Anschlüsse P1, P2, P4 und P8 der Motorbürette MB2 sind mittels Kapillarleitungen 3 des Fluid- und Reagenzientransportsystems mit den Reagenzienbehältern R1 bis R7 verbunden. Über den Port P8 der Motorbürette MB1 sowie den Ventilen V9, V10 und V11 sind vier parallel geschaltete Quellensäulen Q1 bis Q4 angeschlossen, die über die Ventile V12, V13 und V14 wieder auf eine Kapillarleitung 3 zurückgeführt werden. Danach schließt sich hinter einem weiteren Ventil V1, das zum Spülen der Quellen benötigt wird, und einem T-Stück T1 die Fängersäule 4 an. Die Fängersäule 4 ist darüber hinaus über das T-Stück T1 direkt mit dem Port P7 der Motorbürette MB1 verbunden. Der Fängersäule 4 ist ein Geiger-Müller Zählrohr 5 und ein Ventil V2 zur Fraktionierung des Eluats nachgeschaltet. Dem Ventil V2 ist ein weiteres T-Stück T2 mit einem direkten Anschluss an den Port P6 der Motorbürette MB1 sowie ein Ventil V3 nachgeschaltet, mittels dem ein Eluat über das Ventil V15 in das untere Ende des Mischers 6 gelangt. Der Mischer 6 ist über das Ventil V4 am oberen Ende mit dem Port P5 der Motorbürette MB1 verbunden.

Über das Ventil V15 ist der bisher beschriebene Teil des Moduls mit der zweiten Motorbürette MB2 verbunden. Vom Ventil V15 verläuft die Kapillarleitung 3 über das Ventil V16 zum Port P7 der Motorbürette MB 2. Am Ventil V16 zweigt eine Kapillarleitung 3 zum Ventil V5, das auch über einen zwischengeschalteten kapazitiven Sensor 7 und die Ventile V3 und V15 mit dem Mischer 6 verbunden ist, ab und zum anderen an die Reinigungssäule 8 angeschlossen ist. Der Reinigungssäule 8 ist ein weiteres Geiger-Müller Zählrohr 5 und ein Ventil V6 nachgeschaltet. Über das Ventil V6, das T-Stück T3 und das Ventil V7 gelangt das Eluat in den Festbettreaktor 9. Dabei ist das T-Stück T3 in der Verbindungsleitung zwischen den Ventilen V6 und V7 mit dem Port P6 der Motorbürette MB2 verbunden. Auch der Festbettreaktor 9 ist am oberen Ende über das Ventil V8 mit der Motorbürette MB2 verbunden, über den Anschluss P5. Am Ventil V7 ist neben dem Festbettreaktor 9 ein Produktbehälter 10 angeschlossen.

Die Ventile V1, V2 und V6 besitzen jeweils einen Ablaufausgang und sind dadurch zum Spülen der Produktionseinrichtung oder zum Fraktionieren des mit der radioaktiven Substanz beladenen Eluats geeignet. Darüber hinaus besitzen auch die Ventile V4 und V8 einen offenen Ausgang, der jedoch zur Entlüftung genutzt wird. Die Reagenzienbehälter R1 und R5, die jeweils über den Anschluss P1 der Motorbüretten MB1 und MB2 angeschlossen sind, dienen zur Aufnahme verbrauchter Reagenzien, Lösungs- und Reinigungsmittel.

Der oben beschriebene Modulbausatz zum Herstellen von Yttrium-90 ist dabei als variables, steckbares, fixierbares und wechselbares Trägersystem ausgebildet. Alle Produktionseinrichtungen des Moduls, d.h. Quellensäulen Q1 bis Q4, Fängersäule 4, Mischer 6, Reinigungssäule 8 und Festbettreaktor 9 sind in normierten Profilschienen aus eloxiertem Aluminium eingearbeitet und in diesen Profilschienen flexibel auf einer ebenfalls aus Aluminium bestehenden Montageplatte kombinierbar. Mittels eines einfachen Stecksystems sind die Profilschienen mit den Produktionseinrichtungen schnell und sicher auf der Montageplatte fixierbar, so dass Reparaturen an dem radioaktiv beladenen bzw. kontaminierten Modul schnell und unproblematisch durchführbar sind. Neben den Profilschienen mit den Grundelementen des Generatorbausatzes sind auch die Ventile V1 bis V16, Sensoren 5, 7 und T-Stücke T1 bis T3 mittels des Stecksystems auf der Montageplatte oder dazu ausgebildeten Profilschienen fixierbar. Die auf der Montageplatte angeordneten Bauelemente werden mittels geeigneter Kapillarleitungen 3 entsprechend zu einem Generator zum Herstellen von Radiopharmaka und Nukliden verbunden, wobei auch die Kapillarleitungen 3 durch einfach zu handhabende, schnell lösbare Verschraubungen die Flexibilität des Generatorbausatzes unterstützen. Darüber hinaus dienen die Kapillarleitungen 3 zum Anschluss an die Motorbüretten MB1 und MB2 und zur Verbindung der Motorbüretten MB1 und MB2 zu den Reagenzienbehältern R1 bis R7.

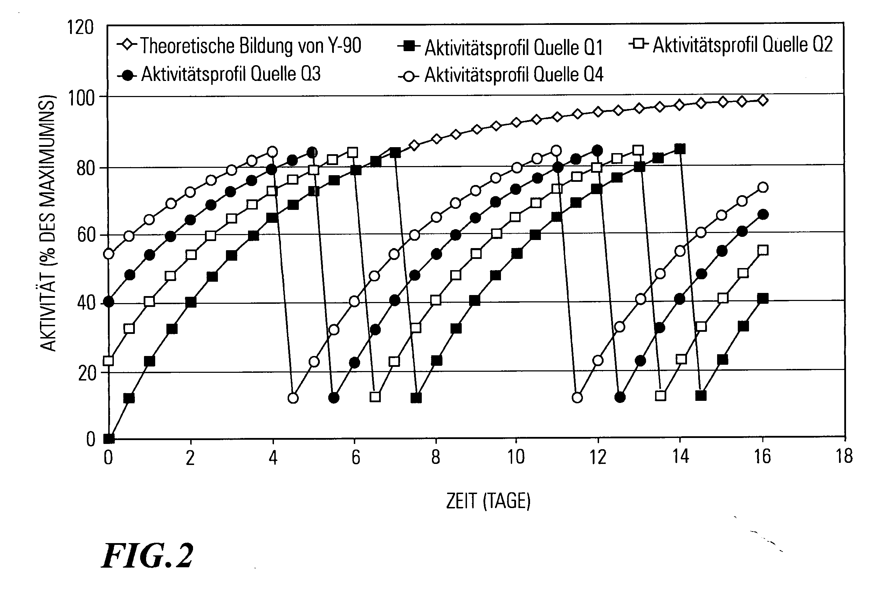

Bei der Herstellung von Yttrium-90 kann jede der parallel geschalteten Quellensäulen Q1 bis Q4 sinnvollerweise nur in einem Abstand von ca. 7 Tagen eluiert werden. Wie in Figur 2 dargestellt, bildet sich bei der Verwendung einer mit Strontium-90 beladenen Quellensäule eine ausreichende Aktivität von Yttrium-90 erst nach ca. 7 Tagen. Das Yttrium-90 entsteht durch den radioaktiven Zerfall des Strontium-90. Bedingt durch den eigenen Zerfall des Yttrium-90, das eine Halbwertszeit von nur ca. 2,7 Tagen besitzt, wird bereits nach ca. 7 Tagen ca. 84 % der erreichbaren Maximalaktivität erlangt. Nach dem relativ schnellen Anstieg der Aktivität in den ersten Tagen wird die Kurve der theoretischen Bildung von Yttrium-90 oberhalb von 7 Tagen immer flacher, d.h. der Zuwachs der Aktivität immer geringer. Da sich nach 7 Tagen bereits eine hinreichende Menge an Yttrium-90 gebildet hat, werden derartige mit Strontium-90 beladene Quellensäulen Q1 bis Q4 üblicherweise einmal in der Woche entladen bzw. eluiert, wie dies durch den Verlauf der Aktivitätsprofile der Quellen Q1 bis Q4 in Figur 2 deutlich wird. Abweichungen von diesem Entladungsprofil können zu einer starken Reduktion der Aktivität des entladenen Yttriums-90 und damit zu einer Verringerung des Wirkungsgrades des Systemmoduls führen.

Bei der herkömmlichen Beladung einer Quellensäule wird das Mutternuklid Strontium-90 auf eine vertikal installierte, mit Harz gefüllte Säule aufgetragen, was zu einer Konzentration des Mutternuklids im oberen Bereich C der Quellensäule aus Figur 3a führt. Von der gesamten Höhe A der Harzmatrix wird so nur der relativ kleine Bereich C tatsächlich mit dem Mutternuklid Strontium-90 präpariert, während der größere, untere Bereich B der Harzmatrix H als reine Harzmatrix verbleibt. Demgegenüber wird bei einer Beladung mit Homogenisation das Strontium-90 gleichmäßig über die gesamte Höhe A der Harzmatrix verteilt. Bei einer herkömmlichen Beladung mit üblicher Konzentration des Mutternuklids im engen Anfangsbereich C der Quellensäule kann selbst bei einer Präparation mit einer üblichen Dosis, z.B. 1,85 bis 3,7 x 10¹⁰ Bq des Mutternuklids Strontium-90, über die Gesamtlaufzeit der Quellensäule zu einer starken radiolytischen Zersetzung der Harzmatrix und damit zu einer verminderten Standzeit der Generatorsäule selbst kommen. Dies wird mit einer Beladung der Quellensäule mit anschließender Homogenisierung vermieden. Fig. 3b zeigt eine derartige homogene Beladung einer Quellensäule, bei der zunächst das Harz H in die Quellensäule gefüllt wird, aber die Säulenverschlüsse E so auf der Säule Q platziert werden, dass ein Leervolumen L entsteht. Dabei nehmen sowohl die Harzmatrix H als auch das Leervolumen L ca. die Hälfte des gesamten Flüssigkeitsvolumens ein, das ca. 200 % des Endvolumens der homogen beladenen Harzmatrix H* entspricht. Zur Präparation der Quellensäule Q wird die Harzmatrix H mit der üblichen Dosis des Strontium-90 beladen und anschließend die Quellensäule Q horizontal gelagert und das Gemenge aus Harz und zugefügtem Strontium-90-Material über einen längeren Zeitraum, z.B. eine oder mehrere Stunden, mittels einer Bewegungsmechanik hin- und herbewegt, so dass sich das Strontium-90 und das Harz mehrmals vollständig durchmischen und schlussendlich homogen ineinander verteilt sind. Danach werden die Endstücke E der Quellensäule Q angepresst, wodurch die homogene Harzmatrix H* komprimiert und überflüssiges Leervolumen L eliminiert wird. Das trägerfreie Strontium-90 ist dann entsprechend homogen in der Harzmatrix H* der Höhe A homogen verteilt, was zu einer geringeren Dosisleistung pro Volumeneinheit des Harzes, einer verminderten Radiolyse des Harzes und dadurch zu einer verlängerten Standzeit der Quellen Q und einer erhöhten Robustheit des gesamten Reaktorsystems führt.

Die in dem Modulbausatz parallel angeordneten Quellensäulen Q1 bis Q4 sind entsprechend dem zuvor beschriebenen Verfahren einer Beladung mit Homogenisation hergestellt und in einem Reaktor nach Fig. 1 zur Herstellung von Ytrium-90 in Reihe geschaltet mit einer Fängersäule 4 und den anschließenden Produktionseinrichtungen zum Aufbereiten des Yttrium-90. Dabei bilden die Quellensäulen Q1 bis Q4 gemeinsam mit der Fängersäule 4 die Generatorsäule des Systems aus in dem aus einem primären radioaktiven Material, hier Strontium-90 die radioaktive Substanz, hier Yttrium 90, für die Herstellung von Radiopharmaka und Nukliden erzeugt wird.

Während der Bildung des Yttrium-90 in der Quellensäule werden die Quellen Q1 bis Q4 täglich mit einer geringen Menge Wasser gespült, um Radikale abzufangen und die Radiolyse der Harzmatrix zu reduzieren. Dazu wird von der Motorbürette MB1 über den Anschluss P4 aus dem Reagenzienbehälter R3 eine kleine Menge (ca. 1 ml) Wasser in die Spritzen-Pumpen-Einheit 1 der Motorbürette MB1 gesaugt. Dieses Wasser wird dann, nachdem das Mehrfachventil 2 der Motorbürette MB1 auf den Port P8 umgeschaltet hat, über das Ventil V9 sowie die Ventile V10 oder V11 durch eine der Quellensäulen Q1 bis Q4 geleitet und über das Ventil V1 aus dem Modulsystem ausgetragen. Eine Kontrolle des Waschwassers ermöglicht eine Bewertung der radioaktiven Zerfallsprozesse in der jeweiligen Quellensäule Q1 bis Q4 und ermöglicht eine Vorwarnung einer radiolytischen Zersetzung der Harzmatrix.

Zur Vorbereitung der Elution einer Quellensäule Q1 bis Q4 wird zunächst die Fängersäule 4 mit der ausgewählten Komplexierungsreagenz, hier Hydroxy-iso-buttersäure (HIBA) konditioniert. Dazu wird eine ausreichende Menge HIBA (ca. 5 ml) über den Port P2 der Motorbürette MB1 aus dem Reagenzienbehälter R2 angesaugt und über den Anschluss P7 in die Fängersäule 4 gegeben. Weiter wird in den Mischer 6 zur Ansäuerung des Eluates eine Säure, hier 2 ml Salzsäure (HCl), vorgelegt. Dazu wird von der Motorbürette MB2 über den Anschluss P8 aus dem Reagenzienbehälter R4 eine entsprechende Menge Salzsäure angesaugt und über den Port P7 und die Ventile V16 und V15 dem Mischer 6 zugeführt.

Zum Durchführen der Elution von Yttrium-90, beispielsweise aus der Quellensäule Q1 wird von der Motorbürette MB1 über den Port P2 aus dem Reagenzienbehälter R2 (HIBA) angesaugt und nach einem Umschalten des Mehrfachventils 2 auf den Ausgang P8 über das Ventil V9 und V10 in die Quellensäule Q1 gepumpt. Die Spitzenpumpeneinheit 1 der Motorbürette MB1 und MB2 ermöglicht es, neben der exakten Dosierung der Reagenz, auch die Geschwindigkeit des geförderten Mediums mit größter Genauigkeit zu bestimmen. Dabei können verschiedene Einbauspritzen mit unterschiedlichem Volumen eingesetzt werden können, üblicherweise aus Borosilikat-Glas mit Edelstahlkolben, die über ein Luer-Adapter aus Glas mit Stahlsicherung schnell und einfach in die Spitzenpumpeneinheit 1 integriert werden können. Die durch die Quellensäule Q1 strömende Komplexierungsreagenz HIBA eluiert in der Säule ausschließlich das Yttrium-90, während das Strontium-90 in der Harzmatrix gebunden bleibt. Die in der Quellensäule Q1 entstehende Yttrium-90-Elution strömt über die Ventile V12, V14 und V1 sowie das T-Stück T1 in die Fängersäule 4. Die Fängersäule 4, die ebenso wie die Quellensäulen Q1 bis Q4 mit einer Harzmatrix versehen ist, üblicherweise aus demselben Material, absorbiert mögliche freie Strontium-90-Radikale aus der Elution.

Von der Fängersäule 4 gelangt das Eluat über den Geiger-Müller Zähler 5 zum Ventil V2. Dabei wird das Ventil V2 ereignismarkiert über die im Geiger-Müller Zähler 5 gemessene Aktivität der Elution geschaltet. Die ereignisorientierte Steuerung des Ventils V2 ermöglicht es, den Teil der Elution, der mit einer ausreichenden Aktivität des Yttrium-90 beladen ist, vom Vor- und Nachlauf zu trennen, d.h. zu fraktionieren. Die mit Yttrium-90 beladene Eluat-Fraktion gelangt über das T-Stück T2 und über die Ventile V3 und V15 in den Mischer 6. Durch die Ansäuerung der mit Yttrium-90 beladenen Fraktion der HIBA in Mischer 6 wird der anionische Yttrium-Komplex zerstört und Yttrium-Chlorid ausgebildet. In dem Mischer 6 wird die Eluat-Fraktion mit der dort vorgelegten Säure vermischt, indem über den Anschluss P6 der Motorbürette MB1, T-Stück T2 und Ventile V3 und V15 Luft in den Mischer 6 gefördert wird. Über das am oberen Ende des Mischers 6 angeordnete Ventil V4 kann die Luft wieder aus dem Mischer 6 entweichen. Die Luft wird von der Motorbürette MB1 über den Anschluss P3 des Mehrfachventils 2 angesaugt, wobei je nach Anforderung am Port P3 ein Sterilfilter angeordnet sein kann. Das Eluat-Säure-Gemisch aus dem Mischer 6 wird durch die aus dem Anschluss P5 über das Ventil V4 von oben in die Mischersäule 6 gepumpte Luft über die Ventile V15, V3 und V5 sowie den kapazitiven Sensor 7 in die Reinigungssäule 8 gedrückt. Sobald der kapazitive Sensor 7 detektiert, dass keine Flüssigkeit mehr gefördert wird, beendet die Prozessorsteuerung die Beladung der Reinigungssäule 8. Das rechtzeitige Abschalten der Förderung des Eluat-Säure-Gemisches verhindert den schädlichen Eintritt einer Luftfraktion in die Reinigungssäule 8.

In der Reinigungssäule 8 geht das freie Yttrium mit dem Kationenaustauscherharz eine Wechselwirkung ein, wodurch eine Trennung des Yttrium-90 von der bisherigen Trägerreagenz HIBA möglich wird.

Das Kationenaustauscherharz in der Reinigungssäule 8 ist identisch mit dem Harz aus den Quellensäulen Q1 bis Q4 sowie der Fängersäule 4 und kann sowohl mit Yttrium-Kationen als auch mit Strontium-Kationen in Wechselwirkung treten, die entweder von einer starken Säure (Salzsäure) oder aber von der Komplexierungsreagenz HIBA gelöst werden kann, wobei HIBA jedoch nur Yttrium-Kationen löst.

Nach dem Beladen der Reinigungssäule 8 mit dem Yttrium-90 wird die Reinigungssäule 8 mit einer verdünnten Säure gespült. Die eingesetzte verdünnte Salzsäure wird aus dem Reagenzienbehälter R6 über den Anschluss P2 durch die Spritzen-Pumpen-Einheit 1 der Motorbürette MB2 angesaugt und über den Anschluss B7 und die Ventile V16 und V5 durch die Spritzen-Pumpen-Einheit 1 in die Reinigungssäule 8 gepumpt. Nach dem Spülen der Reinigungssäule 8, bei dem alle Rückstände der Reagenz HIBA aus der Reinigungssäule 8 entfernt werden, können die mit dem Kationenaustauscherharz der Reinigungssäule 8 in Wechselwirkung stehenden Yttrium-90-Kationen ohne zusätzliche Verunreinigungen eluiert.

Zur Elution des Yttrium-90 aus der Reinigungssäule wird von der Motorbürette MB2 aus dem Reagenzienbehälter R7 stark saure Salzsäure über den Port P4 angesaugt und über den Anschluss P7 in die Reinigungssäule 8 gefördert, in der die Salzsäure das Yttrium-90 aus der Harzmatrix löst. Die Salzsäure-Yttrium-90-Elution aus der Reinigungssäule 8 gelangt über den Geiger-Müller Zähler 5, das Ventil V6, T-Stück T3 und Ventil V7 in den Festbettreaktor 9. Dabei wird das Ventil V6 durch das Geiger-Müller Zählrohr 5 gesteuert, mittels der Prozessorsteuerung, um die Yttrium-90-Elution aus der Reinigungssäule 8 vom Vor- und Nachlauf ohne ausreichende Aktivität zu fraktionieren. In dem bereits auf die Endtemperatur (ca. 130°C) zum Eindampfen des Eluat-Säure-Gemischs vorgeheizten Festbettreaktor 9, z.B. einem Teflon-Festbettreaktor, wird das Gemisch beim ersten Kontakt mit den Heizflächen verdampft. Um eine derartige kontinuierliche Verdampfung zu ermöglichen, wird die Yttrium-90-Elution aus der Reinigungssäule ganz langsam zudosiert. Die langsame Zudosierung und die kontinuierliche Verdampfung im Festbettreaktor 9 ermöglichen extrem kleine Verdampfungsflächen, die von dem Yttrium-90 belegt werden. Außerdem können Siedeverzüge und das Ausstoßen dabei mit radioaktivem Material vermieden werden. Die notwendige Entlüftung des Festbettreaktors 9 bei der kontinuierlichen Verdampfung erfolgt über das Ventil V8.

Nach der Verdampfung im Festbettreaktor 9 wird der Reaktor selbst und das auf den Verdampferflächen abgelagerte Yttrium-90 mit Luft zunächst Säurefrei getrocknet und anschließend gekühlt, wozu von der Motorbürette 2 Luft über den Anschluss P3, bevorzugt sterile Luft über einen angeschlossenen Sterilfilter, in die Spritzen-Pumpen-Einheit 1 eingesaugt und über den Anschluss P6, das T-Stück T3 und das Ventil V7 dem Festbettreaktor 9 zugeführt wird, den die Luft über das Ventil V8 wieder verlässt.

Anschließend wird dem Festbettreaktor 9, bzw. dem auf den Verdampferflächen des Reaktors niedergeschlagenen Yttrium-90 verdünnte Säure, bevorzugt 0,5 ml verdünnte Salzsäure, zugeführt. Die verdünnte Salzsäure wird aus dem Reagenzienbehälter R6 und im Anschluss P2 der Spritzen-Pumpen-Einheit 1 der Motorbürette MB2 zugeführt und wiederum über den Anschluss P6, das T-Stück T3 und Ventil V7 in den Festbettreaktor 9 geleitet. Über den gleichen Weg wird nach der Eingabe der verdünnten Salzsäure in den Reaktor Luft hineingepumpt, wobei wiederum über das Ventil V8 eine Entlüftung erfolgt, um ein vollständiges Ablösen des Yttrium-90 von den Verdampferflächen und eine gute Durchmischung des Yttrium in der verdünnten Salzsäure zu bewirken. Dabei ermöglichen die durch die kontinuierliche Verdampfung ermöglichten geringen Verdampferflächen eine ideale Ausbeutung trotz eines geringen Volumens der zugeführten verdünnten Salzsäure. Nach der Verwirbelung in dem Festbettreaktor 9 wird das Endprodukt in den Produktbehälter 10 ausgestoßen, wozu über den Anschluss P5 und das Ventil V8 dem oberen Anschluss des Festbettreaktors 9 Luft zugeführt wird und das Endprodukt über Ventil V7 in den Produktbehälter 10 gedrückt wird.

Eine weitere erfindungsgemäße Ausführungsform des Bausatzes und des Syntheseverfahrens zeigt Fig. 4. Dieses System dient dabei der Herstellung von C-11-Methionin (Kohlenstoff-11-Methionin). Dieser Bausatz ist mit zwei Synthesemodulen ausgebildete, in denen nach den notwendigen Vorbereitungen für das Syntheseverfahren zwei Synthesen nacheinander durchführbar sind. Dabei besteht das Modul M1 aus der Reaktionssäule 11, den Ventilen V26 und V27, der Kartusche 13, dem Sterilfilter 15 und dem Produktgefäß 17, wobei die Bauteile miteinander durch Kapillarleitungen 3 verbunden sind. Entsprechend besteht das Modul M2 aus der Reaktionssäule 12, den Ventilen V20 und V29, der Kartusche 14, dem Sterilfilter 16 und dem Produktbehälter 18, die ebenfalls durch Kapillarleitung 3 miteinander verbunden sind.

Zur Vorbereitung des C-11-Methionin-Synthesevertahrens werden von der Motorbürette MB1 über den Anschluss P6 und die Ventile V27 und V26, bzw. über den Anschluss P7 und die Ventile V20 und V29, die mit Aluminiumoxid/KF mit Desmethylmethionine beladenen Produktionssäulen 11 bzw. 12 mit Ethanol (Gesamtvolumen ca. 300 µl) befüllt. Über den Einlass 19 in das Fluid- und Reagenzientransportsystem wird von einem anderen Synthesemodul, z.B. nach der Bestrahlung in einem Cyclotron, C-11-Methyliodid mittels eines Helium-Stromes (50 bis 100 ml) in den C-11-Methionin-Generator automatisch eingeleitet. Über die Ventile V22 und V23 gelangt der beladene Heliumstrom zum Ventil V24, an dem es auf die Synthesemodule M1 und M2 aufgeteilt wird, gelangt dann über die Ventile V26 und V29 nacheinander in die Reaktionssäulen 11 und 12. Der beladene Heliumstrom blubbert durch die in den Reaktionssäulen 11 und 12 vorgelegte Ethanol-Lösung und reagiert dort mit dem vorgelegten Reagenz.

Nach Ende des Heliumstromes saugt die Spritzen-Pumpen-Einheit 1 der Motorbürette MB1 die Reaktionssäule 11 des Moduls M1 über die Ventile V26 und V27 und den Anschluss P6 des Mehrfachventils 2 das in Ethanol vorliegende Reaktionsprodukt ab. Nicht reagiertes Reagenz, Aluminiumoxid/KF mit Desmethylmethionin bleibt in der Reaktionssäule 11 zurück. Über den Anschluss P2 des Mehrfachventils 2 saugt die Spritzen-Pumpen-Einheit 1 zusätzlich ein Pufferreagenz, bevorzugt Natriumdihydrogenphosphat-Puffer auf. Über den Port P6 und das Ventil V27, die Kartusche 13 und den Sterilfilter 15 wird das verdünnte Endprodukt in den Behälter 17 ausgestoßen. Aus dem Reagenzienbehälter R1 wird dann nochmals Puffermedium angesaugt und gleichfalls in den Produktbehälter 17 gedrückt.

Die Verarbeitung des Reaktionsprodukts aus der Reaktionssäule 12 des zweiten Synthesemoduls M2 verläuft analog mit Ansaugen und Ausstoßen des Produkts aus dem Anschluss P7 der Motorbürette MB1 über die Ventile V20 und V29.

Zur Reinigung des C-11-Methyliodid-Moduls wird abschließend von der Motorbürette MB1 über Anschluss P3 aus dem Reagenzienbehälter R2 Ethanol angesaugt und über Port P4 und das Ventil V25 dem Fluid- und Reagenzientransportsystem sowie allen Produktionseinrichtungen zugeführt. Nach dem Spülprogramm mit Ethanol wird aus dem Reagenzienbehälter R8 und dem Ventil V28 Stickstoff zum Trockenblasen des Moduls zugeführt.

Eine weitere erfindungsgemäße Ausgestaltung eines Bausatzes zeigt Fig. 5, der zur Herstellung von C-11-Cholin (Kohlenstoff-11-Cholin) dient. Auch dieses Synthesemoduls ist wieder mit einem Doppelmodul zur Herstellung der radioaktiven Substanz ausgebildet. Nach der Vorbereitung des Generators ist das Syntheseverfahren zur Herstellung des C-11-Cholin in den Syntheseeinheiten M3 und M4 nacheinander durchführbar. Das Modul M3 besteht dabei aus der Kartusche 21, dem Sterilfilter 23, dem Ablaufbehälter 25 und dem Produktgefäß 27, die über die Ventile V36 und V37 und den Kapillarleitungen 3 miteinander verbunden sind. Die Syntheseeinheit M4 besteht entsprechend aus einer Kartusche 22, einem Sterilfilter 24, einem Abflussbehälter 26 und dem Produktgefäß 28 sowie den Ventilen V34 und V37 und den die Bauteile miteinander verbindenden Kapillarleitungen 3. Zur Vorbereitung der Synthese wird in den Kartuschen 21 und 22 Diaminoethanol vorgelegt (jeweils etwa 20 µl).

Bei der Durchführung des Syntheseverfahrens zur Erzeugung von C-11-Cholin wird durch den Einlass 29 C-11-Methyliodid, das in einem anderen Synthesemodul nach der Bestrahlung von einem Cyclotron automatisch zum Eintritt 29 gelangt, mittels eines Heliumstromes (50 bis 100 ml). Der Heliumstrom mit dem C-11-Mehthyliodid gelangt dann über die Ventile V32, V39 und V33 zu den beiden Synthesemodulen M3 und M4, in denen der Gasstrom nach den Ventilen V36 bzw. V34 durch die Kartuschen 21 bzw. 22 geleitet wird. In den Kartuschen, die nacheinander mit dem radioaktiv beladenen Heliumstrom beaufschlagt werden, reagiert das vorgelegte Diaminoethanol mit dem durchströmenden C-11-Methyliodid zu C-11-Cholin. Zum Spülen der Kartusche 21 bzw. 22 saugt die Motorbürette MB1 Ethanol aus dem Reagenzbehälter R1 und drückt das Ethanol über den Anschluss P7 und Ventil V36 bzw. den Anschluss P6 und Ventil V34 durch die Kartuschen 21 bzw. 22. Anschließend wird zum nochmaligen Spülen der Kartuschen 21 und 22 Wasser aus dem Reagenzienbehälter R2 von der Motorbürette MB1 angesaugt und über den gleichen Weg durch die Kartuschen 21 bzw. 22 gedrückt. Zum Auswaschend des C-11-Cholin aus der Kartusche wird aus dem Reagenzienbehälter R3 eine Kochsalzlösung über den Anschluss P5 des Mehrfachventils P2 in die Spritzen-Pumpen-Einheit 1 angesaugt und über den bereits beschriebenen Weg durch die Kartuschen 21 und 22 gedrückt. Dabei sind die Ventile V37 und V35 so geschaltet, dass der Durchlauf nicht in die Abflussbehälter 25 und 26, wie beim Spülen, gelangt, sondern über die Sterilfilter 23 und 24 in die Produktgefäße 27 und 28.

Zum Reinigen des Synthesereaktors zum Herstellen von C-11-Cholin wird nochmals mit Ethanol gespült, bevor Stickstoff aus dem Reagenzienbehälter R8 über das Ventil V38 zum Trocknen durch den Reaktor geleitet wird.

Eine weitere erfindungsgemäße Ausgestaltung eines Bausatzes ist das in Fig. 6 gezeigte Gallium-68-Elutionsmodul. In diesem Bausatz ist wiederum eine Generatorsäule 31 eingebaut, bevorzugt eine Germanium-68-Quelle (Halbwertszeit ca. 264 Tage), in der Gallium-68 (Halbwertzeit ca. 68 Minuten) durch radiaktiven Verfall entsteht. Derartige Generatorsäulen können als bleiabgeschirmte Säulen kommerziell erworben werden.

Durch das in Fig. 6 dargestellte Elutionsmodul kann im Bedarfsfall eine automatische Elution der Generatorsäule 31 durchgeführt werden. Dazu werden im Mischer 32 zunächst ca. 4 ml konzentrierte Salzsäure vorgelegt, bevor die Motorbürette MB1 über den Port P5 aus dem Reagenzienbehälter R1 konzentrierte Salzsäure ansaugt und über den Anschluss P3 und das Ventil V1 in die Generatorsäule 31 drückt. Der in der Generatorsäule 31 beladene Salzsäurestrom gelangt dann über das Ventil V42 und V43 in den Mischer 32, der über das Ventil V47 entlüftet wird. Mit der Motorbürette MB1 wird dann über den Anschluss P6 Luft angesaugt, die über den Anschluss P3 und die Ventile V41, V42 und V43 im Bypass zur Reaktorsäule 31 in den Mischer 32 gedrückt wird und dort die vorliegende, beladene Lösung durchmischt. Zum Herausdrücken der durchmischten Lösung wird von der Motorbürette MB1 wiederum Luft angesaugt, aber über den Port P2 und das Ventil V44 in den Mischer 32 gedrückt, wodurch die Lösung in die Steigleitung zum Ventil V43 und über das Ventil V45 zur Kartusche 33 gelangt. In der Kartusche 33 werden die Galliumchloride fixiert, während die restliche Lösung über das Ventil V46 in den Ablaufbehälter 37 gelangt. Über den Anschluss P4 des Mehrwegeventils 2 saugt die Spritzen-Pumpen-Einheit 1 der Motorbürette MB1 Wasser aus dem Reagenzienbehälter R2 an und spült dieses Wasser (ca. 250 µl) über den Anschluss P2 und die Ventile V44 und V45 in Richtung der Kartusche 33 in das Fluid- und Reagenziensystem ein. Anschließend saugt die Motorbürette MB1 über den Anschluss P6 Luft an und drückt über den Anschluss P2, die Ventile V44 und V45 in das eingespülte Wasser über die Kartusche 33 und das Ventil V46 in das Produktgefäß 34.

Mit dem vorliegenden erfindungsgemäßen Bausatz lassen sich unterschiedliche Konstruktionen zum Herstellen von Radiopharmaka und Nuklidprodukten realisieren, in denen die verschiedenen Komponenten, insbesondere bei der Verwendung eines Stecksystems, flexibel angeordnet und kombinierbar sind und auch die Integration von zweiter Seite bereitgestellten Bauelementen ermöglicht wird, beispielsweise einer abgeschirmten Generatorsäule mit sehr hohen Aktivitäten, so genannte "heiße Zellen". Der vorliegende Modulbausatz ermöglicht die stabile aber ebenso leicht zu lösende Montage derartiger heißer Zellen, wobei der erfindungsgemäße Bausatz auch bei der Integration einer hei-ßen Zelle nur eine geringe Grundfläche benötigt, so dass bleiabgeschirmte Abzüge, die rundherum mit Blei abgeschirmt und hermetisch abgeschlossen, d.h. nahezu luftdicht, sind, relativ klein bleiben können. Derartige bleiabgeschirmte Abzüge ermöglichen die Nutzung heißer Zellen zum Herstellen von Radiopharmaka und Nuklidprodukten trotz der sehr hohen Aktivitäten im Inneren der Zelle. Da die Kosten zur Herstellung und Nutzung bleiabgeschirmter Abzüge relativ hoch sind, ermöglicht der erfindungsgemäße Bausatz durch seine kompakte Konstruktion einen verhältnismäßig preisgünstigen Betrieb von Generatoren mit heißen Zellen.

Fig. 7 zeigt eine Ausführung des erfindungsgemäßen Modulbausatzes zur Herstellung von Metallmarkierungen, insbesondere Y-90 oder Lu-177. Zur Vorbereitung werden einige µg Peptid in Lösung über die manuelle Spritze Sp2 in die Kapillarleitung in Richtung des Anschlusses P7 des Mehrfachventils 2 der Motorbürette MB1 geladen. Anschließend werden einige µl einer Pufferlösung über die manuelle Spritze Sp1 in die Kapillarleitung 3 zwischen dem Anschluss P7 und dem Ventil V51 geladen. In dem Reaktionsgefäß 36 befindet sich das notwendige radioaktive Isotop.

Die Motorbürette MB1 saugt über den Anschluss P2 Luft an und spült die vorgelegten Lösungen aus der Kapillarleitung 3 zwischen dem Anschluss P7 und dem Ventil V1 in das Reaktionsgefäß 36. In dem Reaktionsgefäß erfolgt bei einer erhöhten Temperatur, ca. 80°C, über einen Zeitraum von ca. 30 Minuten eine Reaktion. Die Motorbürette MB1 saugt dann über den Anschluss P5 aus dem Reagenzienbehälter R2 weitere Pufferlösungen an und fördert diese Pufferlösungen über den Port P6 und das Ventil V53 in das Produktionsgefäß 36 und von dort über die Ventile V51 und V52 in die Spritze Sp3. Danach wird von der Motorbürette MB1 über den Anschluss P2 Luft angesaugt und alle Lösungsreste über den vorgenannten Weg ebenfalls in die Produktspritze Sp3 gepumpt. Dabei muss jedoch darauf geachtet werden, dass keine Luft in die Produktspritze Sp3 gelangt. Zur Qualitätskontrolle wird über den vorgenannten Leitungsweg durch die Motorbürette MB1 eine kleine Menge der beladenen Lösung zurückgesaugt und über das Ventil V52 in das Gefäß 37 abgeführt.

Für jede spezifische Anwendung des erfindungsgemäßen Bausatzes wird eine optimale Konfiguration der notwendigen Produktionseinrichtungen und weiterer Komponenten ausgewählt. Diese Auswahl hängt davon ab, ob eine Reaktion bei einer erhöhten Temperatur nötig ist, welche und wie viele Reagenzien verwendet werden, wie viele Reaktoren benötigt werden sowie wie viele und welche Ventile für das Syntheseverfahren gebraucht werden. Darüber hinaus können eine oder mehrere Spritzen-Pump-Einheiten bzw. Motorbüretten notwendig sein. Mit einer geeigneten Software kann die notwendige Konfiguration für das ausgewählte Syntheseverfahren am Computer geplant, visualisiert und optimiert werden. Nach Erhalt der endgültigen Konfiguration folgt die praktische Umsetzung der Konstruktion, das Zusammenstecken der Komponenten zu einem Bausatz sowie der Verbindung der Komponenten durch Kapillarleitungen 3 zu einem Fluid- und Reagenzientransportsystem. Die Gesamtabläufe in dem ausgewählten Syntheseverfahren werden bei der Herstellung der Radiopharmaka bzw. Nuklidprodukts entweder manuell, insbesondere mittels einer geeigneten Software, schrittweise gesteuert oder mittels einer Makroprogrammierung einer Software automatisiert. Sowohl ein softwaregesteuerter manueller Modus, als auch ein automatischer Modus kann über entsprechende Logbuchfunktionen alle Schaltvorgänge während des Syntheseverfahrens mit Zeiten und Einstellungen abspeichern und so eine zulassungsfähige Dokumentation der Arbeitsabläufe ermöglichen.

## Patentansprüche

1. Modul-Bausatz zum Herstellen von Radiopharmaka oder Nukliden mit einem Fluid- und Reagenzientransportsystem sowie Produktionseinrichtungen, die mindestens eine Einrichtung zum Ausbilden und/oder Einleiten einer radioaktiven Substanz umfassen,
**dadurch gekennzeichnet, dass** mindestens ein variables, steckbares Trägersystem zur Aufnahme von variablen Baugruppen, insbesondere Säulen, Heizern, Ventilen, Reaktoren, Mixern, mindestens eine Spritzen-Pumpen-Einheit (1), mindestens ein Mehrfachventil (2) und eine Prozessor-Steuerung vorgesehen sind, wobei die mindestens eine Spritzen-Pumpen-Einheit (1) und das mindestens eine Mehrfachventil (2) mittels der Prozessor-Steuerung ansteuerbar sind.

2. Modul-Bausatz nach Anspruch 1,
**dadurch gekennzeichnet, dass** jeweils eine Spritzen-Pumpen-Einheit (1) und ein Mehrfachventil (2) als eine einzige Produktionseinrichtung (Motorbürette) (MB1, MB2) ausgebildet sind.

3. Modul-Bausatz nach Anspruch 1 oder 2,
**dadurch gekennzeichnet, dass** als weitere Produktionseinrichtungen eine Reinigungseinheit (8), Verarbeitungeinheit (9) und/oder Ausstoßeinheit vorgesehen sind.

4. Modul-Bausatz nach einem der Ansprüche 1 bis 3,
**dadurch gekennzeichnet, dass** die Produktionseinrichtungen als variable Baugruppen zur Aufnahme in das variable, steckbare Trägersystem ausgebildet sind.

5. Modul-Bausatz nach einem der Ansprüche 1 bis 4,
**dadurch gekennzeichnet, dass** das Trägersystem mindestens eine Montage- und Grundplatte sowie mindestens eine Profilschiene aufweist, wobei die Profilschiene an der Montage- und Grundplatte anbringbar und zum Aufnehmen der variablen Baugruppe oder der Produktionseinrichtungen ausgebildet ist.

6. Modul-Bausatz nach Anspruch 5,
**dadurch gekennzeichnet, dass** die Montage- und Grundplatte und die Profilschienen aus Aluminium, bevorzugt eloxiertem Aluminium, hergestellt sind.

7. Modul-Bausatz nach einem der Ansprüche 1 bis 6,
**dadurch gekennzeichnet, dass** das Fluid- und Reagenzientransportsystem aus mehreren Komponenten besteht und die Komponenten mittels eines Stecksystems oder eines variablen Montagesystems miteinander verbindbar sind.

8. Modul-Bausatz nach einem der Ansprüche 1 bis 7,
**dadurch gekennzeichnet, dass** mindestens eine Einrichtung zum Ausbilden und/oder Einleiten einer radioaktiven Substanz als Generatorsäule bzw. Quellensäule ausgebildet ist.

9. Modul-Bausatz nach Anspruch 8,
**dadurch gekennzeichnet, dass** die Generatorsäule mindestens zwei parallel geschaltete Quellensäulen (Q1-Q4) für das Ausbilden der radioaktiven Substanz umfasst.

10. Modul-Bausatz nach Anspruch 8 oder 9,
**dadurch gekennzeichnet, dass** ein primäres radioaktives Material und die Harzmatrix (H) homogen in der Generatorsäule oder mindestens einer der Quellensäulen (Q1-Q4) beladen sind.

11. Generator-Bausatz nach einem der Ansprüche 1 bis 10,
**dadurch gekennzeichnet, dass** die Prozessor-Steuerung ereignisorientiert ausgebildet ist.

12. Generator-Bausatz nach Anspruch 11,
**dadurch gekennzeichnet, dass** In-Prozess Mess- und Detektionssysteme, insbesondere kapazitive Sensoren (7) und Aktivitätsdetektoren (z.B. Geiger-Müller Zählrohr, Halbleiterdetektoren, etc.) vorgesehen sind und mit der ereignisorientierten Prozessor-Steuerung gekoppelt sind.

13. Synthese-Verfahren zum Herstellen von Radiopharmaka und Nukliden in einem Modul mit einer Spritzen-Pumpen-Einheit (1) mit folgenden Schritten:
■ Ausbilden und/oder Einleiten einer radioaktiven Substanz,
■ Aufbereiten der radioaktiven Substanz in mindestens einer Produktionseinrichtung,
■ Ausstossen der hergestellten Radiopharmaka oder Nuklide,
wobei die Verfahrensschritte in dem Generator mittels Pump- und Saug-Operationen der Spritzen-Pumpen-Einheit (1) erfolgen.

14. Synthese-Verfahren nach Anspruch 13 zum Herstellen von Yttrium (Y-90) mit folgenden Schritten:
■ Bilden des Yttriums in einer Generatorsäule aus einem primären radioaktiven Material,
■ Eluieren des Yttriums aus der Generatorsäule,
■ Aufbereiten des Eluats,
■ Ausstoßen des Yttrium-Endprodukts.
wobei die Verfahrenschritte dem in dem Generator mittels Pump- und Saug-Operationen der Spritzen-Pumpen-Einheit (1) erfolgen.

15. Synthese-Verfahren nach Anspruch 14,
**dadurch gekennzeichnet, dass** die Generatorsäule mindestens eine Quellensäule (Q) und eine Fängersäule (5) umfasst, und in der Quellensäule (Q) aus dem primären radioaktiven Material das Yttrium gebildet wird,
wobei das Eluieren des Yttriums aus der Generatorsäule die folgenden Schritte umfasst:
■ Eluieren des Yttriums aus einer Quellensäule (Q),
■ Verhindern eines Durchtritts von primärem radioaktiven Material in einen nachfolgenden Aufbereitungsbereich in einer Fängersäule (4),
■ Fraktionieren des yttriumhaltigen Eluats vom Vor- und Nachlauf.

16. Synthese-Verfahren nach Anspruch 15,
**dadurch gekennzeichnet, dass** die Generatorsäule mindestens zwei parallel geschaltete Quellensäulen (Q1-Q4) umfasst, in denen aus dem primären radioaktiven Material die radioaktive Substanz gebildet wird.

17. Synthese-Verfahren nach Anspruch 15 oder 16,
**dadurch gekennzeichnet, dass** das primäre radioaktive Material homogen in der Quellensäule (Q) verteilt ist, wobei die Herstellung der homogenen Verteilung die folgenden Schritte umfasst:
■ Herstellen eines Breis aus einer Harzmatrix (H) und verdünnter Salpetersäure,
■ Vorlegen des Breis in die Quellensäule (Q) und Absetzen der Harzmatrix (H),
■ Ausbilden eines Leervolumens (L) in der Quellensäule (Q) durch Trennen der Salpetersäure von der Harzmatrix (H),
■ Beladen der Harzmatrix (H) mit einem primären radioaktiven Material,
■ homogene Verteilung des primären radioaktiven Materials in der Harzmatrix (H) durch vollständige Durchmischung der Harzmatrix (H) in der Quellensäule (Q),
■ Kompression der Harzmatrix (H) zur Eliminierung des Leervolumens (L).

18. Synthese-Verfahren nach einem der Ansprüche 14 bis 17, wobei nach dem Eluieren des Yttriums aus der Generatorsäule ein oder mehrere der folgenden Schritte folgen:
■ Mischen des Eluats mit einer Säure in einem Mischer (6),
■ Reinigen des Eluats oder des Eluats-Säure-Gemischs in einer Reinigungssäule (8).

19. Synthese-Verfahren nach einem der Ansprüche 14 bis 18, wobei das Aufbereiten des Eluats ein oder mehrere der folgenden Schritte umfasst:
■ kontinuierliche Verdampfung des Eluats oder des Eluats-Säure-Gemischs in einem Reaktor (9), bevorzugt einem Festbettreaktor, Absetzen des Yttriums
■ Kühlen des Reaktors (9),
■ Lösen und Verwirbeln des fraktionierten Yttriums in dem Reaktor (9), bevorzugt in verdünnter Salzsäure.

20. Synthese-Verfahren nach Anspruch 13 zum Herstellen von C-11-Methionin mit folgenden Schritten:
■ Befüllen einer Produktionseinrichtung, bevorzugt einer Reaktionssäule (11,12), eines Synthesemoduls mit einem geeigneten Reaktionsmedium, bevorzugt Aluminiumoxid mit Desmethylmethionine in Ethanol,
■ Einleiten von C-11-Methyliodid in das Synthesemodul, bevorzugt mittels eines Helium-Strom,
■ Durchleiten des C-11-Methyliodid-Stroms durch das Reaktionsmedium in der Produktionseinrichtung,
■ Reaktion des C-11-Methyliodid mit dem Reaktionsmedium, Beladung des Reaktionsmedium mit C-11-Methionin,
■ Absaugen des beladenen Reaktionsmedium aus der Produktionseinrichtung mittels der Spritzen-Pumpen-Einheit (1),
■ Ausstoßen des beladenen Reaktionsmediums in ein Produktgefäß mittels der Spritzen-Pumpen-Einheit (1).

21. Synthese-Verfahren nach Anspruch 14 zum Herstellen von C-11-Cholin mit folgenden Schritten:
■ Befüllen einer Produktionseinrichtung, bevorzugt einer Kartusche (21,22), eines Synthesemoduls mit einem geeigneten Reaktionsmedium, bevorzugt Diaminoethanol,
■ Einleiten von C-11-Methyliodid in das Synthesemodul, bevorzugt mittels eines Helium-Strom,
■ Durchleiten des C-11-Methyliodid-Stroms durch die Produktionseinrichtung,
■ Reaktion des C-11-Methyliodid mit dem Reaktionsmedium, Beladung der Produktionseinrichtung mit C-11-Cholin,
■ Spülen der Produktionseinrichtung, bevorzugt zunächst mit Ethanol und anschließend mit Wasser, mittels der Spritzen-Pumpen-Einheit (1),
■ Ausspülen des C-11-Cholin aus der Produktionseinrichtung mit einem Trägermedium, bevorzugt einer Kochsalzlösung, mittels der Spritzen-Pumpen-Einheit (1),
■ Ausstoßen des mit C-11-Cholin beladenen Trägermediums in ein Produktgefäß mittels der Spritzen-Pumpen-Einheit (1).

22. Synthese-Verfahren nach Anspruch 14 zum Herstellen einer Gallium-Elution (Ga-68) mit folgenden Schritten:
■ Befüllen eines Mischers mit einem geeigneten Reaktionsmedium, bevorzugt konzentrierte Salzsäure,
■ Durchleiten eines weiteren Teils des Reaktionsmediums durch eine Generatorsäule (31) mit einem primären radioaktiven Material, insbesondere eine Germanium-Quelle, mittels der Spritzen-Pumpen-Einheit (1),
■ Ausbilden des Gallium in der Generatorsäule (31),
■ Beladen des weiteren Teils des Reaktionsmediums in der Generatorsäule (31) mit Gallium,
■ Einleiten des beladenen Reaktionsmediums in den Mischer (32),
■ Durchmischen des Reaktionsmediums im Mischer (32) mittels durch die Spritzen-Pumpen-Einheit (1) geförderter Luft,
■ Herausdrücken des Reaktionsmediums aus dem Mischer (32) über eine Produktionseinrichtung, bevorzugt eine Kartusche (35), in ein Abfallgefäß (35) mittels durch die Spritzen-Pumpen-Einheit (1) geförderter Luft, Beladung der Produktionseinrichtung mit Gallium,
■ Spülen des Generators ohne Produktionseinrichtung mit Wasser mittels der Spritzen-Pumpen-Einheit (1),
■ Spülen des Generators mit Produktionseinrichtung mit Luft mittels der Spritzen-Pumpen-Einheit (1),
■ Ausspülen des Gallium aus der Produktionseinrichtung mit einem Trägermedium, bevorzugt Wasser, und Ausstoßen des mit Gallium beladenen Trägermediums in ein Produktgefäß (34) mittels der Spritzen-Pumpen-Einheit (1).
